# EUROPÄISCHE PATENTANMELDUNG

(11) **EP 4 696 628 A1**
(43) Veröffentlichungstag der Anmeldung: **18.02.2026**
(21) Anmeldenummer: 25193980.7
(22) Anmeldetag: 05.08.2025
(51) Int. Cl.: B65H 5/22, B65H 29/24, B65H 29/54

(54) **VORRICHTUNG UND VERFAHREN ZUM TRANSPORT UND VEREINZELN VON ZUSCHNITTEN EINER MATERIALBAHN**

(30) Priorität: 15.08.2024 DE 102024123355
(71) Anmelder: OPTIMA life science GmbH, 74523 Schwäbisch Hall (DE)
(72) Erfinder: Bareiß, Jürgen, 74523 Schwäbisch Hall (DE)
(74) Vertreter: Patentanwälte Ruff, Wilhelm, Beier, Dauster & Partner mbB

(57) **Zusammenfassung**

Die Erfindung betrifft eine Vorrichtung (100) zum Transport und Vereinzeln von Zuschnitten (1010) einer Materialbahn (1000) mit einem Vakuumzylinder (8) zum Transport der Zuschnitte (1010), einem Vakuumtransportzylinder (7) zum Weitertransport der Zuschnitte (1010) und mit einer Steuereinheit (9). Erfindungsgemäß weist der Vakuumzylinder (8) ein schwenkbares Vakuumsegment (82) auf und es ist ein Schwenkantrieb (85) vorgesehen zum Verschwenken des Vakuumsegments im laufenden Betrieb. So wird ermöglicht, dass der wirksame Vakuumbereich auf einer Mantelfläche des Vakuumzylinders (8) reduzierbar ist.

Die Erfindung betrifft auch ein Verfahren zum Transport und Vereinzeln von Zuschnitten einer Materialbahn.

Vorrichtung und Verfahren ermöglichen eine schonendere und genauere Übergabe von Zuschnitten von einem Vakuumzylinder auf einen Vakuumtransportzylinder.

## Beschreibung

Die Erfindung betrifft eine Vorrichtung zum Transport und Vereinzeln von Zuschnitten einer Materialbahn mit einem Vakuumzylinder zum Transport der Zuschnitte, einem stromabwärtig dazu angeordneten Vakuumtransportzylinder zum Weitertransport der Zuschnitte, und mit einer weiter stromabwärtigen Übergabeebene zur Übernahme der Zuschnitte vom Vakuumtransportzylinder.

Die Erfindung betrifft auch ein Verfahren zum Transport und Vereinzeln von Zuschnitten einer Materialbahn.

### Stand der Technik

Es ist bekannt, eine Membran-Elektroden-Anordnung (Engl. membrane electrode assembly, kurz MEA) oder Teile davon für eine Brennstoffzelle, eine Elektrolysezelle oder eine Redox Flow-Zelle (Flüssigbatterie) oder Membran-basierte Luftbefeuchter aus Materialbahnen herzustellen. Die MEA umfasst in Ausgestaltungen eine Katalysator-beschichtete Membran (engl. Catalyst Coated Membrane, kurz CCM), an welcher einseitig oder beidseitig Randverstärkungen oder Rahmen (engl. Frame oder rim) aus kostengünstigerem und widerstandsfähigerem Material vorgesehen sind. Für einen weiteren Aufbau können an Außenseiten der MEA zwei Gasdiffusionslagen (kurz GDL) angebracht werden. Ein Anbringen der GDL kann dabei in einem Prozess mit der Herstellung der MEA umfassend die CCM und den oder die Rahmen oder in einem räumlich und/oder zeitlich getrennten Prozess erfolgen. In einer anderen Ausgestaltung wird eine MEA umfassend eine Membran und zwei daran angeordnete Gasdiffusionslagen bereitgestellt, wobei an dieser MEA einseitig oder beidseitig Randverstärkungen oder Rahmen angebracht werden.

Um die einzelnen Komponenten bzw. Zuschnitte der MEA aneinander zu positionieren und miteinander zu verbinden ist es aus dem Stand der Technik bekannt, einzelne Komponenten aus Rollenmaterial auszustanzen, aufeinander abzulegen und zu laminieren. Für eine gute Wirksamkeit der MEA ist es erforderlich, dass die Komponenten exakt zueinander ausgerichtet und positioniert werden. Weiter wichtig ist es, die Komponenten möglichst schonend zu behandeln, da beispielsweise auf Katalysator-beschichtete Membrane wirkende kleine Kräfte bereits Risse in der Mikrostruktur der Beschichtung hervorrufen können.

Weiterhin ist es aus dem Stand der Technik bekannt, die Komponenten der MEA auf Vakuumzylindern zu transportieren. Die Vakuumzylinder sind dazu an ihren Mantelflächen mit einer porösen oder löchrigen Oberfläche versehen, durch welche Unterdruck bereitgestellt wird. Um den Abstand von im Materialfluss auf einem Vakuumzylinder transportierten Komponenten bzw. Zuschnitte zu verändern, insbesondere zu vergrößern, um später eine einzelne Ablage und Positionierung auf anderen Komponenten zu ermöglichen, werden die Komponenten von einem langsamer rotierenden Vakuumzylinder auf einen schneller rotierenden Vakuumzylinder übergeben. Zu Beginn der Übergabe wird ein jeweiliger Zuschnitt überwiegend von dem ersten Vakuumzylinder angesaugt und gehalten. In einer späteren Phase der Übergabe wird der Zuschnitt überwiegend von dem zweiten Vakuumzylinder angesaugt und gehalten. Je weiter sich der Übertragungsprozess fortsetzt, umso mehr verlagert sich das Kräfteverhältnis zugunsten des nachfolgenden Zylinders. An dem Punkt, wo die Ansaugkräfte des zweiten Zylinders überwiegen, wird der Zuschnitt gegen die verbleibende Ansaugkraft von dem ersten Zylinder heruntergezogen.

Hierbei kommt es zu Schlupf, welcher zu einer Positionsungenauigkeit bei der Übertragung auf den zweiten Zylinder führt. Auch kann der Beschleunigungsvorgang im Schlupfprozess nicht genau vorherbestimmt werden, was ebenfalls die Positionsgenauigkeit verschlechtert. Gerade im Bereich der MEA-Fertigung bestehen hohe Anforderungen an die Genauigkeit von aufeinander abzulegenden MEA-Komponenten.

Ein weiterer negativer Nebeneffekt besteht darin, dass bei der Übergabe Kräfte auf die Zuschnitte wirken, die bei leicht dehnbaren Zuschnitten, nämlich bei MEA-Komponenten, insbesondere der CCM, zu einer Längung führen. In anderen Worten: Der zweite Zylinder zieht am vorderen Ende des Zuschnitts, der erste Zylinder hält den Zuschnitt zurück.

Nachteilig bei der bekannten Lösung ist also, dass zum einen bei der Übergabe vom ersten auf den zweiten Vakuumzylinder Kräfte auf die Komponenten wirken, welche diese beeinträchtigen oder gar beschädigen oder zerstören können. Zum anderen kommt es zu ungewünschtem Schlupf zwischen den Komponenten und der Oberflächen der Vakuumzylinder. Durch den Schlupf verlieren die Komponenten ihre definierte Position auf der Oberfläche der Vakuumzylinder, was eine spätere exakte Positionierung zu anderen Komponenten beeinträchtigt.

### Aufgabenstellung

Aufgabe der vorliegenden Erfindung ist es eine Vorrichtung zum Transport und zum Vereinzeln von Zuschnitten einer Materialbahn zu schaffen und ein Verfahren zum Transport und Vereinzeln von Zuschnitten einer Materialbahn zu beschreiben, welche eine möglichst schlupffreie und somit schonendere und genauere Übergabe von Zuschnitten von einem Vakuumzylinder auf einen Vakuumtransportzylinder ermöglichen und die Nachteile des Standes der Technik zumindest teilweise beheben.

### Technische Lösung

Gelöst wird diese Aufgabe durch eine Vorrichtung zum Transport und zum Vereinzeln von Zuschnitten einer Materialbahn wie sie nachfolgend beschrieben und beansprucht ist.

Erfindungsgemäß wurde als vorteilhaft erkannt, einen Vakuumzylinder mit einem schwenkbaren Vakuumsegment zu versehen, das ermöglicht, dass der wirksame Vakuumbereich auf einer Mantelfläche des Vakuumzylinders reduzierbar ist.

Die Vorrichtung dient zum Transport und Vereinzeln von Zuschnitten einer Materialbahn, insbesondere von MEA-Komponenten. Bei den Zuschnitten kann es sich alternativ auch beispielsweise um Wundlauflagen, Etiketten, Folien- oder Membranzuschnitte o.ä. handeln. Die Vorrichtung besitzt einen Vakuumzylinder zum Transport der Zuschnitte, einen stromabwärtig - in Transportrichtung der Materialbahn und der Zuschnitte gesehen - dazu angeordneten Vakuumtransportzylinder zum Weitertransport der Zuschnitte, und eine weiter stromabwärtige Übergabeebene zur Übernahme der Zuschnitte vom Vakuumtransportzylinder, sowie eine Steuereinheit. Vereinzeln von Zuschnitten meint, dass diese einzeln abgelegt oder übergeben werden können. Gegebenenfalls kann auch der Abstand zwischen zwei aufeinanderfolgenden Zuschnitten vergrößert werden, insbesondere dann, wenn die Zuschnitte direkt aneinander angrenzend ohne Abstand dem Vakuumzylinder zugeführt werden.

Erfindungsgemäß weist der Vakuumzylinder ein schwenkbares Vakuumsegment auf, welches sich über einen Winkelbereich des Vakuumzylinders erstreckt, zum Beaufschlagen von dessen Mantelfläche mit Unterdruck. Es ist ein Schwenkantrieb vorgesehen zum Verschwenken des Vakuumsegments im laufenden Betrieb der Vorrichtung. Dazu ist der Schwenkantrieb mit der Steuereinheit datenübertragungstechnisch verbunden und kann von dieser angesteuert werden.

Durch eine rotative Verstellbewegung des Winkelbereichs, insbesondere um die Rotationsachse des Vakuumzylinders, kann die Zeitdauer von auf einen jeweiligen Zuschnitt wirkenden Vakuums relativ zum Drehwinkel des Vakuumzylinders festgelegt werden. So kann beispielsweise erreicht werden, dass das auf einen Zuschnitt wirkende Vakuum im Übergabebereich, d.h. im Walzenspalt von Vakuumzylinder und Vakuumtransportzylinder früher oder später beendet werden kann.

Insbesondere ist in der Steuereinheit mindestens ein Bewegungsprofil für den Schwenkantrieb hinterlegt. Das Bewegungsprofil umfasst Werte zur zeitlichen Ansteuerung und zum Schwenkwinkel der Verschwenkbewegung.

In vorteilhafter Weise kann durch das Verschwenken des Vakuumsegments Einfluss genommen werden auf die wirksame Haltekraft auf einen Zuschnitt oder Teile davon bei dessen Übergabe von dem Vakuumzylinder auf den Vakuumtransportzylinder.

In Weiterbildung der Vorrichtung liegt die Schwenkachse des Vakuumsegments in der Rotationsachse des Vakuumzylinders. Besonders vorteilhaft ist es, wenn sich das Vakuumsegment über einen Winkelbereich von 180 - 300° des Vakuumzylinders erstreckt, insbesondere von 250 - 290°. So wird erreicht, dass ein Großteil der Mantelfläche des Vakuumzylinders einen wirksamen Vakuumbereich aufweist. Trotzdem verbleibt noch ein ausreichender Bereich, in welchem kein Vakuum vorliegt, und welcher verwendet werden kann, um eine Ablösung eines Zuschnitts vom Vakuumzylinder zu unterstützen oder eine Reduktion des auf einen Zuschnitt wirksamen Vakuums zu bewirken.

In einer ersten Ausführungsform der Vorrichtung wird das Vakuumsegment durch einen Sektor gebildet, d.h. durch ein kreisausschnittsförmiges Segment, der zur Mantelfläche des Vakuumzylinders geöffnet und innerhalb des hohl ausgeführten Vakuumzylinders drehbar gelagert ist. In einer Ausgestaltung besitzt der Sektor eine Kammer beinhaltet, die über eine Drehdurchführung in der Rotationsachse des Vakuumzylinders an ein Unterdrucksystem angeschlossen ist und so Bohrungen bzw. Löcher oder Poren in der Manteloberfläche des Vakuumzylinders mit Unterdruck versorgt.

Gemäß einer zweiten Ausführungsform weist der Vakuumzylinder gleichmäßig über seinen Umfang verteilte Versorgungskanäle auf und das Vakuumsegment wird durch mindestens eine Steuerscheibe gebildet, welche die Versorgungskanäle mit einem Unterdrucksystem verbinden kann.

Bei dieser Ausgestaltung können beispielsweise axial verlaufende Versorgungskanäle unter der Manteloberfläche des Vakuumzylinders angeordnet sein, die eine fluidische Verbindung zu den Löchern bzw. Poren in der Mantelfläche des Vakuumzylinders haben. Eine Steuerscheibe oder ggfs. auch zwei Steuerscheiben, die an einer oder beiden Stirnflächen des Vakuumzylinders dichtend angeordnet sind, verschließen die Versorgungskanäle bzw. geben diese frei. Die Steuerscheiben können so gestaltet sein, dass diese an der Innenseite nierenförmige Aushöhlungen haben, die außenseitig an ein Unterdrucksystem angeschlossen sind. Die mindestens eine Steuerscheibe mit ihrer mit Unterdruck beaufschlagten Niere ist drehbar um die gemeinsame Achse mit dem Vakuumzylinder gelagert und lässt sich von außen betätigt mit dem Schwenkantrieb verstellen.

In möglicher Weiterbildung der Vorrichtung ist zumindest der Vakuumzylinder mit einem eigenen, unabhängigen steuerbaren Antriebsmotor zu dessen Rotationsantrieb ausgestattet, wobei der Antriebsmotor des Vakuumzylinders mit der Steuereinheit datenübertragungstechnisch verbunden ist zur Ansteuerung des Antriebsmotors. Der Vakuumzylinder kann mit einem Geschwindigkeitsprofil betrieben werden, das in der Steuereinheit hinterlegt ist. In der Steuereinheit sind Geschwindigkeitsprofile für die Rotation des Vakuumzylinders hinterlegt oder erzeugbar, d.h. berechenbar. Der Antriebsmotor des Vakuumzylinders kann so angesteuert werden, dass der Vakuumzylinder mit einem Geschwindigkeitsprofil mit unterschiedlichen Rotationsgeschwindigkeiten rotiert wird. In anderen Worten: der Vakuumzylinder wird während seiner Rotation gezielt beschleunigt, abgebremst oder kurzzeitig ganz angehalten. In vorteilhafter Weise kann so Einfluss genommen werden auf den Schlupf bei der Übergabe eines Zuschnitts von dem Vakuumzylinder auf den Vakuumtransportzylinder und kann erforderlichenfalls der Abstand zwischen zwei Zuschnitten vor und nach der Übergabe verändert werden.

In Weiterbildung der erfindungsgemäßen Vorrichtung ist diese mit einer Einrichtung zur Materialbahnzuführung zum Transport einer Materialbahn, mit einem Stanzzylinder und einem Gegenstanzzylinder zum Stanzen von Zuschnitten aus der Materialbahn stromaufwärtig des Vakuumzylinders und/ oder des Vakuumtransportzylinders ausgestattet. Der Stanzzylinder ist auf der einen Seite der Materialbahn und der Gegenstanzzylinder auf der anderen Seite der Materialbahn angeordnet, derart, dass die Materialbahn zwischen beiden hindurchführbar ist und dabei gestanzt werden kann. Auch Ausschnitte, also Zuschnitte, welche von einem Stanzrest umrandet sind, werden hier als Zuschnitte bezeichnet. Die Einrichtung zur Materialbahnzuführung, der Stanz- und der Gegenstanzzylinder sind je mit einem eigenen, unabhängigen Antriebsmotor zu deren Rotationsantrieb ausgestattet.

Gemäß einer ersten Variante ist die Materialbahn zumindest einlagig und weist eine Produktlage ohne Trägerlage auf und der Vakuumzylinder wird durch den Stanzzylinder oder den Gegenstanzzylinder gebildet. Eine Produktlage, welche von Stanzzylinder und Gegenstanzzylinder gestanzt wird, kann mehrere Schichten aufweisen.

In vorteilhafter Weise wird bei dieser Variante ein besonders kompakter Aufbau der Vorrichtung ermöglicht.

Gemäß einer zweiten Variante ist die Materialbahn mehrlagig mit zumindest einer Trägerlage und einer Produktlage und die Vorrichtung besitzt eine Delaminiereinheit zum Trennen der Trägerlage von den Zuschnitten die auf dem Vakuumzylinder fixiert sind. Dank der Trägerlage können besonders empfindliche und / oder labile Produktlagen transportiert und bearbeitet werden. Eine Produktlage, welche von Stanzzylinder und Gegenstanzzylinder gestanzt wird, kann mehrere Schichten aufweisen.

Bei beiden Varianten kann die Vorrichtung eine Einrichtung zum Abtransport der Stanzreste und ggfs. der von den Zuschnitten befreiten Trägerlage besitzen.

In vorteilhafter Weiterbildung der Vorrichtung ist zumindest der Vakuumtransportzylinder mit einer haftungsoptimierten, nämlich haftungsverstärkenden Oberfläche ausgestattet, derart, dass die Oberfläche eine gute Anhaftung der Zuschnitte ermöglicht. So wird in vorteilhafter Weise auch dann eine ausreichende Haftung gewährleistet, wenn diese nicht schon Dank den Materialeigenschaften der Zylindermantelfläche gewährleistet ist. Durch die haftungsverstärkende Oberfläche kann sichergestellt werden, dass Schlupf bei der Übergabe der Zuschnitte vom Vakuumzylinder auf den Vakuumtransportzylinder vermieden oder zumindest reduziert wird. Die Zuschnitte können so ohne Beeinträchtigung ihrer Position übergeben werden.

Die Erfindung betrifft auch ein **Verfahren** zum Transport und Vereinzeln von Zuschnitten einer Materialbahn wie es nachfolgend beschrieben und beansprucht ist und insbesondere auf einer wie vorstehend beschriebenen Vorrichtung ausgeführt werden kann.

Das Verfahren dient zum Transport und Vereinzeln von Zuschnitten einer Materialbahn, insbesondere von Komponenten einer MEA, mit folgenden sich kontinuierlich widerholenden Schritten:
a) Zuführen einer Materialbahn mit Zuschnitten
b) Transport der Zuschnitte auf einem Vakuumzylinder
c) Übergabe der Zuschnitte auf einen Vakuumtransportzylinder und
d) Transport der Zuschnitte auf dem Vakuumtransportzylinder
e) Übergabe der Zuschnitte an eine Übergabeebene
wobei in Schritt c) der wirksame Vakuumbereich auf einer Mantelfläche des Vakuumzylinders während der Übergabe eines jeweiligen Zuschnitts reduziert wird. Insbesondere kann ein stromaufwärtig und angrenzend an den Walzenspalt von Vakuumzylinder und Vakuumtransportzylinder liegender Bereich des Vakuumzylinders belüftet und frei von Vakuum gestellt werden. Die Lage des Vakuumbereichs kann beispielsweise verschoben werden, was nachfolgend noch näher ausgeführt wird.

In besonders vorteilhafter Weiterbildung des Verfahrens weist der Vakuumzylinder ein Vakuumsegment auf, welches sich über einen Winkelbereich des Vakuumzylinders erstreckt, zum Beaufschlagen von dessen Mantelfläche mit Unterdruck. Das Vakuumsegment wird während der Übergabe der Zuschnitte auf einen Vakuumtransportzylinder entgegen der Rotationsrichtung des Vakuumzylinders verschwenkt.

Bei Versuchen wurde herausgefunden, dass es vorteilhaft ist, wenn das Verschwenken des Vakuumsegments entgegen der Rotationsrichtung einsetzt, sobald mindestens 20%, insbesondere mindestens 40% der Fläche eines jeweiligen Zuschnitts von dem Vakuumzylinder an den Vakuumtransportzylinder übergeben ist und von diesem gehalten wird.

Durch das Verschwenken des Vakuumsegments wird erreicht, dass die Haftwirkung des Vakuums auf den hinteren Teil des Zuschnitts abgeschwächt wird, und so die Rückhaltekräfte reduziert werden. Das verhindert eine unnötige Dehnung der Zuschnitte während der Übergabe. Die Dehnung zu begrenzen ist insbesondere bei empfindlichen Materialien erforderlich, wie z.B. Membranen, wie sie im Bereich der Brennstoffzellenfertigung eingesetzt werden. Durch die überwiegende Übertragung eines Zuschnitts vor Reduktion des wirksamen Vakuumbereichs wird in vorteilhafter Weise sichergestellt, dass die Zuschnitte positionsgenau übertragen werden können, ihre Orientierung nicht verlieren und trotzdem kaum Dehnung erfahren.

In Weiterbildung des Verfahrens wird das Vakuumsegment vor der Übergabe eines jeweils nachfolgenden nächsten Zuschnitts vom Vakuumzylinder an den Vakuumtransportzylinder in Rotationsrichtung verschwenkt. Das Vakuumsegment wird also wieder zurück geschwenkt in seine ursprüngliche Stellung. So wird sichergestellt, dass ein nachfolgender Zuschnitt über seiner gesamten Länge und gerade auch im Bereich seiner Vorderkante durch das Vakuum sicher an den Vakuumzylinder angesaugt werden kann. Die Schwenkgeschwindigkeit des Vakuumsegments beim Zurückschwenken kann der Rotationsgeschwindigkeit des Vakuumzylinders entsprechen, Vakuumsegment und Vakuumzylinders also beide synchron bewegt werden. Bevor ein nachfolgender Zuschnitt den Walzenspalt erreicht, ist die Mantelfläche des Vakuumzylinders im Übergabebereich wieder mit Vakuum beaufschlagt.

In Weiterbildung des Verfahrens wird der Vakuumzylinder mit einem Geschwindigkeitsprofil betrieben, derart, dass bei Beginn der Übergabe eines jeweiligen Zuschnitts Vakuumzylinder und Vakuumtransportzylinder mit gleichen Oberflächengeschwindigkeiten rotiert werden, d.h. dann wenn die Vorderkante eines jeweiligen Zuschnitts den Übergabebereich, also den Walzenspalt von Vakuumzylinder und Vakuumtransportzylinder erreicht. Hierbei kann auch vom Synchronlauf von Vakuumzylinder und Vakuumtransportzylinder gesprochen werden.

Verschwenken des Vakuumsegments und Geschwindigkeitsprofil des Vakuumzylinders wirken dabei in geeigneter Weise zusammen, so dass bei Beginn der Übergabe eines jeweiligen Zuschnitts vom Vakuumzylinder und an den Vakuumtransportzylinder ein Zuschnitt über seine ganze Fläche mit Unterdruck gehalten wird, eine Abschwächung des Unterdruckes in dem Vakuumzylinder im hinteren Bereich des Zuschnitts erst erfolgt und eine Ablösung des Zuschnittes von dem Vakuumzylinder erleichtert wird, sobald eine ausreichende Fixierung des vorderen Bereichs des Zuschnitts auf dem Vakuumtransportzylinder gegeben ist. In anderen Worten: durch die Überlagerung von Bewegungsprofil der Schwenkbewegung des Vakuumsegments und Geschwindigkeitsprofil der Rotation des Vakuumzylinders kann eine noch genauere, schlupffreiere und schonendere Übergabe realisiert werden.

Dieses Verfahren kann kombiniert werden, mit dem in der DE 10 2024 122 364 beschriebenen Verfahren, auf welche hiermit vollinhaltlich Bezug genommen wird.

Gemäß der DE 10 2024 122 364 wird während der Übergabe eines jeweiligen Zuschnitts vom Vakuumzylinder an den Vakuumtransportzylinder die Rotationsgeschwindigkeit des Vakuumzylinders temporär reduziert.

Das Geschwindigkeitsprofil kann dabei derart ausgestaltet sein, dass die Rotationsgeschwindigkeit des Vakuumzylinders reduziert wird, sobald mindestens 50%, insbesondere mindestens 65% der Fläche eines jeweiligen Zuschnitts von dem Vakuumzylinder an den Vakuumtransportzylinder übergeben ist und von diesem gehalten wird.

Besonders vorteilhaft erscheint es, wenn der Vakuumtransportzylinder mit vornehmlich konstanter Rotationsgeschwindigkeit bewegt wird, da dann eine besonders exakte Übergabe und Positionierung der Zuschnitte in der stromabwärtigen Übergabeebene unterstützt wird.

Wenn auch das sich in der Übergabeebene befindliche umlaufende Transportband oder die sich in der Übergabeebene befindliche Produktbahn mit konstanter und gleicher Geschwindigkeit wie der Vakuumtransportzylinder bewegen, kann eine hochpositionsgenaue Ablage der Zuschnitte erreicht werden.

Konstante Geschwindigkeit meint hier nicht, dass die Geschwindigkeit unveränderlich ist. Vielmehr ist gemeint, dass sich die Geschwindigkeit im Regelbetrieb nicht permanent ändert, also kaum Beschleunigungen oder Abbremsungen vorliegen, sodass ein kontinuierlicher Fertigungsprozess ermöglicht wird. Soll - z-B. mit der Zielsetzung einer höheren Ausbringung - die Geschwindigkeit des sich in der Übergabeebene befindlichen umlaufenden Transportbands oder der sich in der Übergabeebene befindlichen Produktbahn erhöht werden, oder soll - z.B. wegen eines erforderlichen Rollenwechsels oder einer temporär langsamer arbeitenden inline vorgeschalteten Produktionsanlage - die Geschwindigkeit des sich in der Übergabeebene befindlichen umlaufenden Transportbands oder der sich in der Übergabeebene befindlichen Produktbahn verringert werden so müssen die Geschwindigkeiten der anderen Elemente der Vorrichtung, also Vakuumzylinder, Vakuumtransferzylinder, etc. entsprechend angepasst werden.

Die beschriebene Erfindung und die beschriebenen vorteilhaften Weiterbildungen der Erfindung stellen auch in Kombination miteinander - soweit dies technisch sinnvoll ist - vorteilhafte Weiterbildungen der Erfindung dar.

Hinsichtlich weiterer Vorteile und in konstruktiver und funktioneller Hinsicht vorteilhafter Ausgestaltungen der Erfindung wird auf die Unteransprüche sowie die Beschreibung von Ausführungsbeispielen unter Bezugnahme auf die beiliegenden Figuren verwiesen.

### Ausführungsbeispiel

Die Erfindung soll anhand beigefügter Figuren noch näher erläutert werden. Einander entsprechende Elemente und Bauteile sind in den Figuren mit gleichen Bezugszeichen versehen. Zugunsten einer besseren Übersichtlichkeit der Figuren wurde auf eine maßstabsgetreue Darstellung verzichtet.

Es zeigen in schematischer Darstellung
- Fig. 1: eine erste Ausführungsform einer Vorrichtung zum Transport und Vereinzeln von Zuschnitten
- Fig. 2a und b: eine zweite Ausführungsform einer Vorrichtung zum Transport und Vereinzeln von Zuschnitten einer einlagigen Materialbahn mit zwei Untervarianten
- Fig. 3: eine dritte Ausführungsform einer Vorrichtung zum Transport und Vereinzeln von Zuschnitten einer mehrlagigen Materialbahn
- Fig. 4 a,b,c: eine Detailansicht des Vakuumzylinders und des Vakuumtransportzylinders zu verschiedenen Zeitpunkten
- Fig. 5: einen Zuschnitt in einer Draufsicht
- Fig. 6 a,b: zwei Ausführungsformen eines Vakuumsegments.

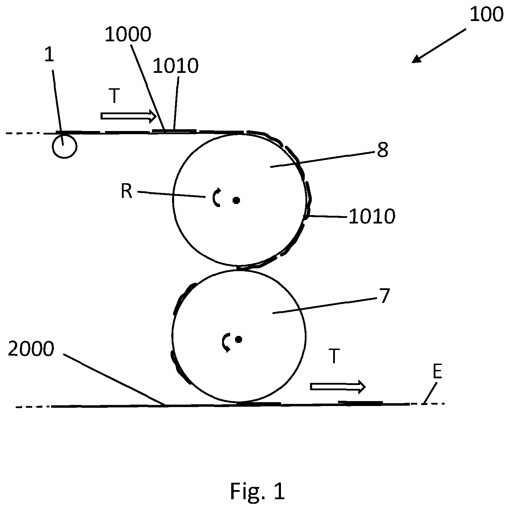

Fig.1 zeigt eine erste Ausführungsform einer Vorrichtung 100 zum Transport einer Materialbahn 1000 bestehend aus aneinandergereihten Zuschnitten 1010 und dient dem Vereinzeln der Zuschnitte 1010. Die Vorrichtung 100 ist mit einer Einrichtung 1 zur Materialbahnzuführung zum Transport der Materialbahn 1000, einem Vakuumzylinder 8 zum Transport der Zuschnitte 1010, einem - in Transportrichtung T gesehen - stromabwärtig dazu angeordneten Vakuumtransportzylinder 7 zum Weitertransport der Zuschnitte 1010 und mit einer weiter stromabwärtigen Übergabeebene E zur Übernahme der Zuschnitte 1010 vom Vakuumtransportzylinder 7 ausgestattet. In den Figuren sind nur einzelne Zuschnitte 1010 beispielhaft dargestellt.

In der Übergabeebene E wird eine Produktbahn 2000 geführt transportiert zur Aufnahme der Zuschnitte 1010 von dem Vakuumtransportzylinder 7.

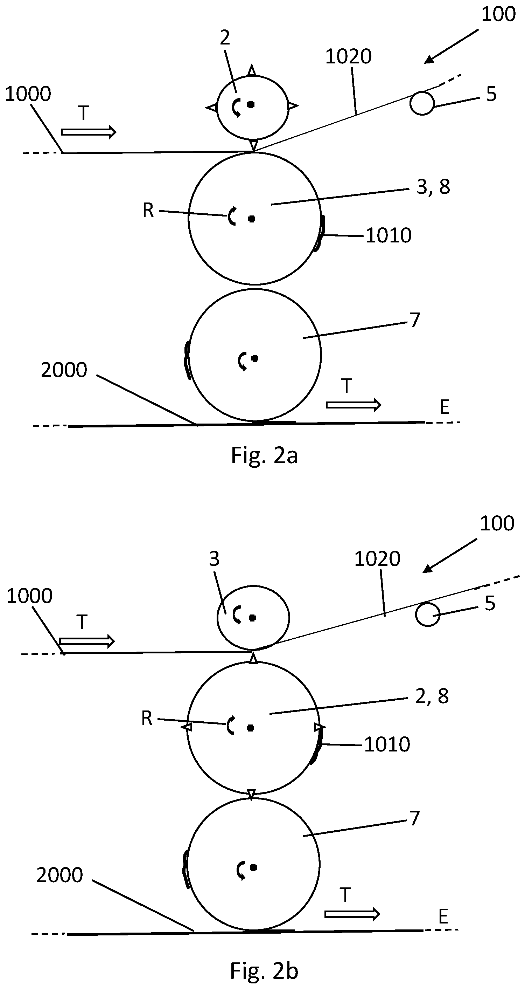

Fig. 2a und b zeigen eine zweite Ausführungsform einer Vorrichtung zum Transport und Vereinzeln von Zuschnitten einer einlagigen Materialbahn 1000 in zwei Teilvarianten a) und b).

Die Vorrichtung 100 ist mit einem Stanzzylinder 2 und einem Gegenstanzzylinder 3 zum Stanzen von Zuschnitten 1010 aus der Materialbahn 1000 ausgestattet, welche stromaufwärtig des Vakuumtransportzylinders 7 angeordnet sind. Der Vakuumzylinder 8 wird bei Variante a) durch den Gegenstanzzylinder 3 und in Variante b) durch den Stanzzylinder 2 gebildet und verfügt über einen eigenen, unabhängigen Antriebsmotor (nicht dargestellt). Eine Einrichtung 1 zur Materialbahnzuführung ist hier sowie in der nachfolgend beschriebenen Figur zwecks besserer Übersichtlichkeit nicht dargestellt. Stromabwärtig des Stanzzylinders 2 ist eine Einrichtung 5 zum Abtransport der Stanzreste 1020 angeordnet.

In der Übergabeebene E wird eine Produktbahn 2000 geführt transportiert zur Aufnahme der Zuschnitte 1010 von dem Vakuumtransportzylinder 7.

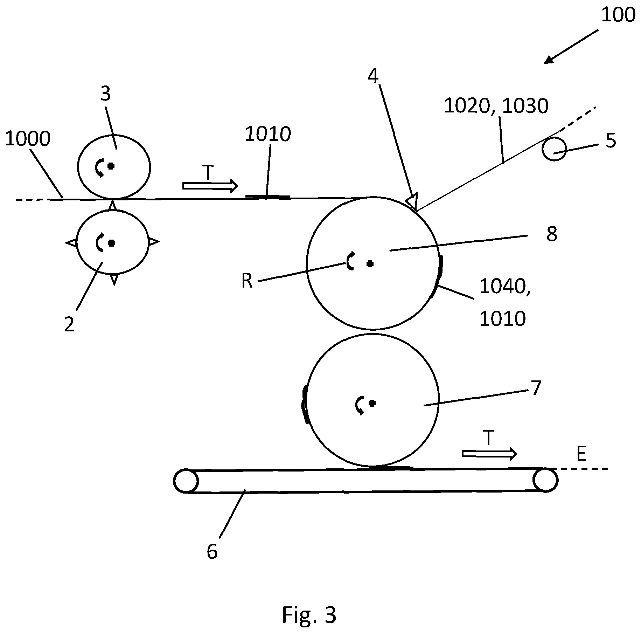

Fig. 3 zeigt eine dritte Ausführungsform einer Vorrichtung 100 zum Transport und Vereinzeln von Zuschnitten, welche ähnlich aufgebaut ist wie die in Fig. 2 dargestellte Vorrichtung 100. Im Unterschied ist die Materialbahn 1000 mehrlagig mit zumindest einer Trägerlage 1030 und einer Produktlage 1040. Stromabwärtig des Stanzzylinders 2 besitzt die Vorrichtung eine Delaminiereinheit 4 zum Trennen der Zuschnitte 1010 von der Trägerlage 1030.

Weiterhin ist eine Einrichtung 5 zum Abtransport der Stanzreste 1020 und der Trägerlage 1030 vorgesehen.

Im weiteren Unterschied zu den vorstehend beschriebenen Ausführungsformen verfügt die Übergabeebene E über ein Transportband 6 zum Weitertransport der Zuschnitte 1010.

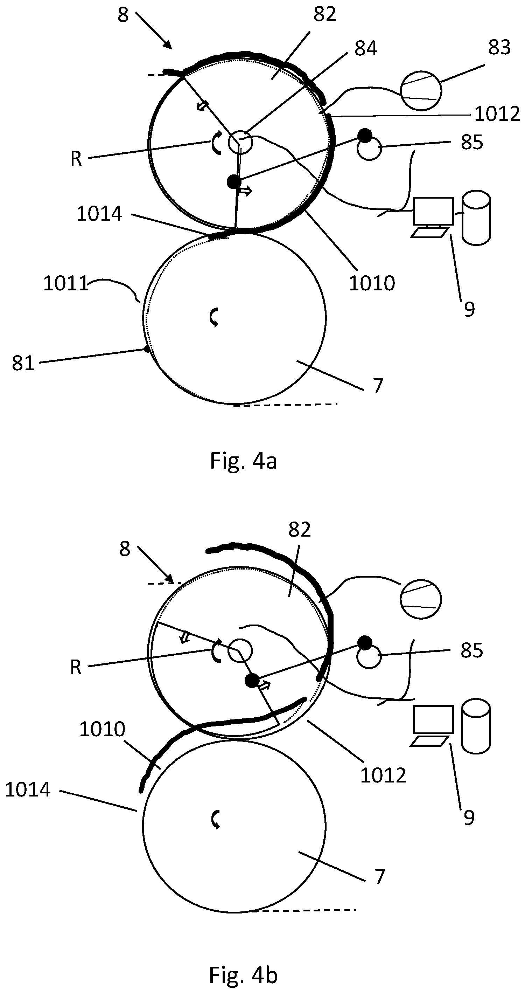

Fig. 4a-c zeigen eine Detailansicht des Vakuumzylinders und des Vakuumtransportzylinders im Zeitverlauf.

Vakuumzylinder 8 und Vakuumtransportzylinder 7 können je mit einem eigenen, unabhängigen Antriebsmotor 84 ausgestattet sein, sodass der Vakuumzylinder 8 mit einem Geschwindigkeitsprofil mit unterschiedlichen Rotationsgeschwindigkeiten R rotiert werden kann.

Der Vakuumzylinder 8 weist ein verstellbares Vakuumsegment 82 auf, mittels welchem die Mantelfläche des Vakuumzylinders 8 mit Unterdruck beaufschlagt wird. Das Vakuumsegment 82 ist dazu fluidisch mit einem Unterdruckerzeuger 83 verbunden.

Wie durch Doppelpfeile angedeutet kann das Vakuumsegment 82 in seiner Lage verschwenkt, also verdreht werden, wird dabei jedoch nicht vergrößert oder verkleinert. Die Verschwenkbewegung wird durch einen von der Steuereinheit 9 angesteuerten Schwenkantrieb 85 realisiert.

Teil der Vorrichtung 100 ist auch eine Steuereinheit 9, mit welcher zumindest der Antriebsmotor 84 des Vakuumzylinders 8 und der Schwenkantrieb 85 datenübertragungstechnisch verbunden sind und angesteuert werden können. In der Steuereinheit 9 sind Geschwindigkeitsprofile für die Rotation des Vakuumzylinders 8 und Bewegungsprofile für das Verschwenken des Vakuumsegments 82 hinterlegt oder erzeugbar, welche abhängig von der Länge 1013 und/oder der Flächenverteilung über die Länge 1013 eines jeweiligen Zuschnitts 1010 sind. Das Bewegungsprofil, welches dem Schwenkantrieb 85 aufgeprägt wird, ist auch abhängig vom Geschwindigkeitsprofil des Vakuumzylinders 8.

Das in der Momentaufnahme von Fig. 4a dargestellte Vakuumsegment 82 befindet sich in einer nicht ausgelenkten Normallage. Der Zuschnitt 1010, welcher gerade mit seiner Vorderkante 1014 an den Vakuumtransportzylinder 8 übergeben wurde, wird vom Walzenspalt an über seine ganze Länge bis zu seiner Hinterkante 1012 mittels Vakuum auf dem Vakuumzylinder 8 gehalten. So ist sichergestellt, dass der Zuschnitt 1010 positionsgenau von dem Vakuumzylinder 8 auf den Vakuumtransportzylinder 7 übergeben werden kann.

Fig. 4b ist eine Momentaufnahme zu einem etwas späteren Zeitpunkt. Vakuumzylinder 8 und Vakuumtransportzylinder 7 haben sich weitergedreht und mit ihnen wurde der Zuschnitt 1010 weitertransportiert. Um die wirksame Vakuumfläche des Vakuumzylinder 7 zu reduzieren und die Haltekraft des Vakuums auf den Zuschnitt 1010 ebenfalls zu reduzieren, wurde das Vakuumsegment 82 - wie durch Pfeile angedeutet - entgegen der Rotationsrichtung R des Vakuumzylinder 8 verschwenkt. Im Bereich des Walzenspaltes zwischen Vakuumzylinder 8 und Vakuumtransportzylinder 7 ist die Mantelfläche des Vakuumzylinders 8 belüftet und der Zuschnitt 1010 erfährt hier keine vakuumbedingte Haltekraft. Somit wird die auf den hinteren Teilbereich des Zuschnitts 1010 wirkende Haltekraft verringert, was ermöglicht den Vakuumzylinder 8 abzubremsen, ohne dass es zu Lageverschiebungen des Zuschnitts 1010 bei der weiteren Übergabe kommt. Dank der Geschwindigkeitsreduktion des Vakuumzylinders 8, welche durch eine Anwendung eines entsprechenden Geschwindigkeitsprofils auf den Antriebsmotor 84 erreicht wird, kann der Abstand zwischen zwei aufeinander folgenden Zuschnitten 1010 vergrößert werden.

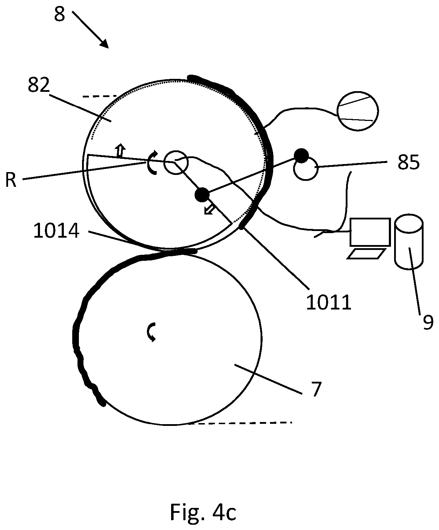

Wie aus der nächsten Momentaufnahme von Fig. 4c ersichtlich wurde der Abstand zwischen den Zuschnitten 1010 vergrößert. Um sicherzustellen, dass der nachfolgende Zuschnitt 1010 mit seiner Vorderkante 1011 vom Vakuumzylinder 8 bei Beginn der Übergabe auf den Vakuumtransportzylinder 7 sicher gehalten wird, erfolgt ein Zurückschwenken des Vakuumsegments 82 durch eine Verschwenkbewegung in Rotationsrichtung R des Vakuumzylinders 8, angedeutet durch zwei Pfeile. Die Verschwenkbewegung wird durch den Schwenkantrieb 85 bewirkt, angesteuert von der Steuereinheit 9. Die Verschwenkbewegung kann dabei die gleiche Rotationsgeschwindigkeit besitzen wie der Vakuumzylinder 8. Das Vakuumsegment 82 wird so weit verschwenkt, bis es wieder in seiner Normallage (vgl. Fig. 4a) angekommen ist.

Der anhand der Figuren 4a-c skizzierte Bewegungsablauf von Vakuumsegment 82 und Vakuumzylinder 8 wiederholt sich für jeden Zuschnitt 1010.

Der Vakuumtransportzylinder 7 ist mit einer haftungsoptimierten Oberfläche 81 ausgestattet, um die Anhaftung der Zuschnitte 1010 zu verbessern und Schlupf bei der Übergabe zwischen den Zylindern 7, 8 zu reduzieren.

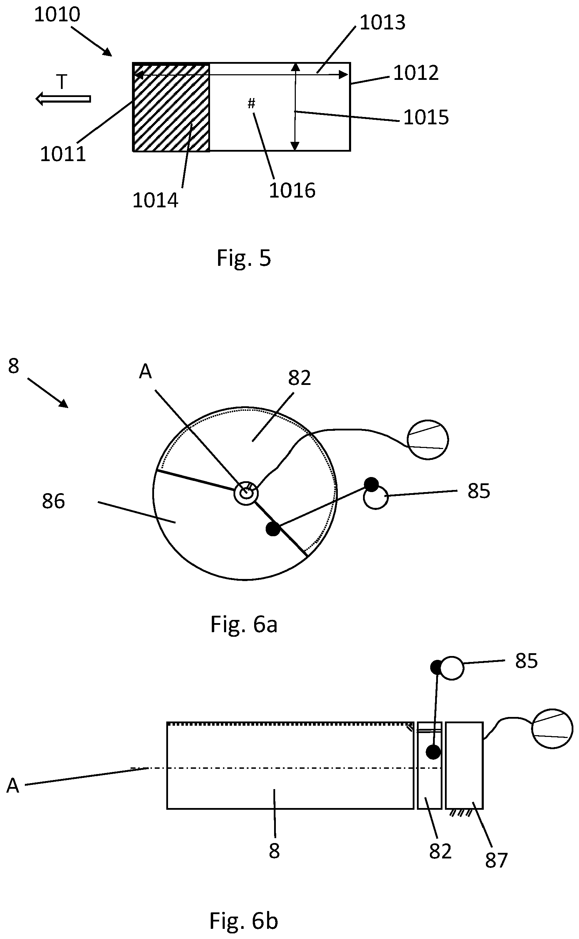

Fig. 5 zeigt einen Zuschnitt 1010 in einer Draufsicht mit den Abmaßen des Zuschnitts 1010.

Von der Vorderkante 1011 bis zur Hinterkante 1012 hat ein Zuschnitt eine Länge 1013. Der Zuschnitt 1010 hat eine Breite 1015. Die Fläche des Zuschnitts, als Produkt von Länge 1013 und Breite 1015 ist mit 1016 markiert. Eine Teilfläche 1014, welche 1/3 des vorderen Bereichs des Zuschnitts 1010 einnimmt, also mehr als 30% von dessen Gesamtfläche, ist zur Verdeutlichung mit einer Schraffierung versehen.

Fig. 6 a und b zeigen zwei Ausführungsformen eines Vakuumsegments.
In der Ausführungsform von Fig. 6a wird das Vakuumsegment 82 durch einen mantelfächenseitig halboffenen Hohlzylinder, einen Sektor, gebildet, der innerhalb des Vakuumzylinders 8 drehbar gelagert ist. Dort, wo der Hohlzylinder an seiner Mantelfläche geöffnet ist, wird Vakuum an der Mantelfläche des Vakuumzylinders 8 bereitgestellt. Dort, wo der Hohlzylinder an seiner Mantelfläche geschlossen ist, wird kein Vakuum an der Mantelfläche des Vakuumzylinders 8 bereitgestellt und es existiert ein Bereich 86 ohne Vakuum. Der Hohlzylinder kann eine Kammer beinhalten, die über eine Drehdurchführung (nicht dargestellt) in der Rotationsachse A des Vakuumzylinders 8 an ein Unterdrucksystem angeschlossen ist und so Bohrungen bzw. Löcher oder Poren in der Manteloberfläche des Vakuumzylinders 8 mit Unterdruck versorgt.

In der Ausführungsform von Fig. 6b wird das Vakuumsegment 82 durch eine verschwenkbare Steuerscheibe gebildet, welche ein Bindeglied zwischen Vakuumzylinder 8 und einer feststehende Scheibe 87 mit Vakuumanschluss ist. Der Vakuumzylinder 8 ist gleichmäßig über seinen Umfang mit axial verlaufenden Versorgungskanäle versehen, welche durch eine punktierte Linie angedeutet sind und die eine fluidische Verbindung zu Löchern bzw. Poren in der Mantelfläche des Vakuumzylinders 8 haben. Die Steuerscheibe dient dazu die Versorgungskanäle mit einem Unterdrucksystem zu verbinden.

Die Steuerscheibe verschließt die Versorgungskanäle bzw. gibt diese frei. Die Steuerscheibe kann so gestaltet sein, dass diese an ihrer Innenseite (in der Abbildung links) nierenförmige Aushöhlungen hat, die außenseitig (in der Abbildung rechts) an ein Unterdrucksystem angeschlossen sind. Die Steuerscheibe mit ihrer mit Unterdruck beaufschlagten Niere ist schwenkbar um die gemeinsame Achse A mit dem Vakuumzylinder 8 gelagert und lässt sich von außen betätigt mit einem Schwenkantrieb 85 verstellen.

### Bezugszeichenliste

- 1: Einrichtung zur Materialbahnzuführung
- 2: Stanzzylinder
- 3: Gegenstanzzylinder
- 4: Delaminiereinheit
- 5: Einrichtung zum Abtransport
- 6: Transportband
- 7: Vakuumtransportzylinder
- 8: Vakuumzylinder
- 81: Oberfläche Vakuum(transport)zylinder
- 82: verschwenkbares Vakuumsegment (Winkelbereich)
- 83: Unterdrucksystem / Vakuumpumpe
- 84: Antriebsmotor
- 85: Schwenkantrieb
- 86: Bereich ohne Vakuum
- 87: feststehende Scheibe mit Vakuumanschluss
- 9: Steuereinheit

- 100: Vorrichtung zum Transport und Vereinzeln

- 1000: Materialbahn
- 1010: Zuschnitt aus Materialbahn
- 1011: Vorderkante Zuschnitt
- 1012: Hinterkante Zuschnitt
- 1013: Länge Zuschnitt
- 1014: 1/3 der Fläche des Zuschnitts
- 1015: Breite des Zuschnitts
- 1016: Fläche des Zuschnitts
- 1020: Stanzrest
- 1030: Trägerlage
- 1040: Produktlage
- 2000: Produktbahn

- A: Rotationsachse
- E: Übergabeebene
- R: Rotationsrichtung
- E: Übergabeebene

## Patentansprüche

1. Vorrichtung (100) zum Transport und Vereinzeln von Zuschnitten (1010) einer Materialbahn (1000) mit einem Vakuumzylinder (8) zum Transport der Zuschnitte (1010), einem stromabwärtig dazu angeordneten Vakuumtransportzylinder (7) zum Weitertransport der Zuschnitte (1010),
mit einer weiter stromabwärtigen Übergabeebene (E) zur Übernahme der Zuschnitte (1010) vom Vakuumtransportzylinder (7),
und mit einer Steuereinheit (9),
**dadurch gekennzeichnet, dass**
der Vakuumzylinder (8) ein schwenkbares Vakuumsegment (82) aufweist, welches sich über einen Winkelbereich des Vakuumzylinders (8) erstreckt, zum Beaufschlagen von dessen Mantelfläche mit Unterdruck, und, dass
ein Schwenkantrieb (85) vorgesehen ist zum Verschwenken des Vakuumsegments (82), wobei der Schwenkantrieb (85) mit der Steuereinheit (9) datenübertragungstechnisch verbunden ist.

2. Vorrichtung nach Anspruch 1
**dadurch gekennzeichnet, dass**
in der Steuereinheit (9) mindestens ein Bewegungsprofil für den Schwenkantrieb (85) hinterlegt ist.

3. Vorrichtung nach einem der vorangehenden Ansprüche,
**dadurch gekennzeichnet, dass**
die Schwenkachse des Vakuumsegments (82) in der Rotationsachse des Vakuumzylinders (8) liegt.

4. Vorrichtung nach Anspruch 3
**dadurch gekennzeichnet, dass**
sich das Vakuumsegment (8) über einen Winkelbereich von 180 - 300° des Vakuumzylinders (8) erstreckt, insbesondere von 250 - 290°.

5. Vorrichtung nach einem der vorangehenden Ansprüche,
**dadurch gekennzeichnet, dass**
das Vakuumsegment (82) durch einen Sektor gebildet werden, der zur Mantelfläche des Vakuumzylinders (8) geöffnet und innerhalb des Vakuumzylinders (8) drehbar gelagert ist oder, dass
der Vakuumzylinder (8) gleichmäßig über seinen Umfang verteilte Versorgungskanäle aufweist und das Vakuumsegment (82) durch mindestens eine Steuerscheibe gebildet wird, welche die Versorgungskanäle mit einem Unterdrucksystem (83) verbinden kann.

6. Vorrichtung nach einem der vorangehenden Ansprüche,
**dadurch gekennzeichnet, dass**
zumindest der Vakuumzylinder (8) mit einem steuerbaren Rotationsantrieb (84) ausgestattet ist.

7. Vorrichtung nach einem der vorangehenden Ansprüche,
**dadurch gekennzeichnet, dass** die Vorrichtung (100) ausgestattet ist mit
- einer Einrichtung (1) zur Materialbahnzuführung zum Transport einer Materialbahn (1000) und /oder
- einem Stanzzylinder (2) und einem Gegenstanzzylinder (3) zum Stanzen von Zuschnitten (1010) aus der Materialbahn (1000) stromaufwärtig des Vakuumzylinders (8) und/ oder des Vakuumtransportzylinders (7) und / oder
- einem Vakuumtransportzylinder (7) mit einer haftungsoptimierten Oberfläche (81) und / oder
- wenn die Materialbahn (1000) mehrlagig ist mit zumindest einer Trägerlage (1030) und einer Produktlage (1040), mit einer Delaminiereinheit (4) zum Trennen der Zuschnitte (1010) von der Trägerlage (1030) und / oder
- einer Einrichtung (5) zum Abtransport der Stanzreste (1020) und ggfs. der Trägerlage (1030) und / oder
- einem Transportband (6) oder einem Transportsystem mit Produktaufnahmen in der Übergabeebene (E) zum Weitertransport der Zuschnitte (1010) oder,
mit einer Produktbahn (2000) in der Übergabeebene (E) zur Aufnahme der Zuschnitte (1010).

8. Verfahren zum Transport und Vereinzeln von Zuschnitten (1010) einer Materialbahn (1000) mit folgenden Schritten:
a) Zuführen einer Materialbahn (1000) mit Zuschnitten (1010)
b) Transport der Zuschnitte (1010) auf einem Vakuumzylinder (8)
c) Übergabe der Zuschnitte (1010) auf einen Vakuumtransportzylinder (7) und
d) Transport der Zuschnitte (1010) auf dem Vakuumtransportzylinder (7)
e) Übergabe der Zuschnitte (1010) an eine Übergabeebene (E)
wobei in Schritt c) der wirksame Vakuumbereich auf einer Mantelfläche des Vakuumzylinders (8) während der Übergabe eines jeweiligen Zuschnitts (1010) reduziert wird.

9. Verfahren nach Anspruch 8
**dadurch gekennzeichnet, dass**
der Vakuumzylinder (8) ein Vakuumsegment (82) aufweist, welches sich über einen Winkelbereich des Vakuumzylinders (8) erstreckt, zum Beaufschlagen von dessen Mantelfläche mit Unterdruck, und das Vakuumsegment (82) in Schritt c) entgegen der Rotationsrichtung (R) des Vakuumzylinders (8) verschwenkt wird.

10. Verfahren nach Anspruch 9
**dadurch gekennzeichnet, dass**
das Verschwenken des Vakuumsegments (82) entgegen der Rotationsrichtung (R) einsetzt, sobald mindestens 20%, insbesondere mindestens 40% der Fläche (1016) eines jeweiligen Zuschnitts (1010) von dem Vakuumzylinder (8) an den Vakuumtransportzylinder (7) übergeben ist und von diesem gehalten wird.

11. Verfahren nach einem der Ansprüche 9 - 10
das Vakuumsegment (82) vor der Übergabe eines jeweils nachfolgenden nächsten Zuschnitts (1010) vom Vakuumzylinder (8) an den Vakuumtransportzylinder (7) in Rotationsrichtung (R) des Vakuumzylinders (8) verschwenkt wird.

12. Verfahren nach einem der Ansprüche 8 - 11
in Schritt c) während dem Beginn der Übergabe eines jeweiligen Zuschnitts (1010) vom Vakuumzylinder (8) an den Vakuumtransportzylinder (7) der Vakuumzylinders Vakuumzylinder (8) an den Vakuumtransportzylinder (7) synchron rotieren.

13. Verfahren nach einem der Ansprüche 8 - 12
**dadurch gekennzeichnet, dass**
der Vakuumtransportzylinder (7) mit konstanter Rotationsgeschwindigkeit (R) bewegt wird.
